# EUROPEAN PATENT SPECIFICATION

(11) **EP 0 204 341 B1**
(45) Date of publication and mention of the grant of the patent: **03.03.1993**
(21) Application number: 86107705.5
(22) Date of filing: 06.06.1986
(51) Int. Cl.: G06K 7/14, G06K 7/016

(54) **Bar code reading method and apparatus**
Verfahren und Gerät zum Lesen von Strichcode
Méthode et appareil de lecture de code à barres

(30) Priority: 06.06.1985 JP 121570/85
(43) Date of publication of application: 10.12.1986
(73) Proprietor: Kabushiki Kaisha Sato, Shibuya-ku Tokyo (JP)
(72) Inventor: Ohta, Masataka, Kawasaki-shi Kanagawa-ken (JP)
(74) Representative: Grünecker, Kinkeldey, Stockmair & Schwanhäusser Anwaltssozietät

(56) References cited:
- US-A- 180 152
- US-A- 3 792 236
- US-A- 3 811 033
- US-A- 3 838 251
- US-A- 4 146 046

## Description

### BACKGROUND OF THE INVENTION

### Field of the Invention

The present invention relates to a method of reading bar codes and an apparatus therefor, and particularly to a method of reading bar codes and an apparatus therefor wherein the speed at which an optical reader scans the bar code does not require to be limited, while still assuring the accuracy with which they are read.

### Description of the Prior Arts

There exist different kinds of bar codes; Figs. 12 to 15 show some typical bar codes in current use. Specifically, Fig. 12 shows a bar code which is composed of thin and thick printed bars and thin and thick spaces. Thick bars and spaces represent binary "1" whereas thin bars and spaces represent binary "0". Fig. 13 shows a bar code which is composed of thin and thick printed bars and thin spaces. Thick bars represent binary "1", and thin bars represent binary "0"; spaces, however, have no significance as data. Fig. 14 shows a bar code which is composed of thin and thick spaces and thin printed bars. Thick spaces represent binary "1", and thin spaces represent binary "0", while the bars have no significance as data. Finally, Fig. 15 shows a bar code which is employed for the J.A.N., UPC and WPC. In this bar code a numerical character is composed of seven modules of equal width. These seven modules form two bars and two spaces, and each bar module represents binary "1" whereas each space module represents binary "0".

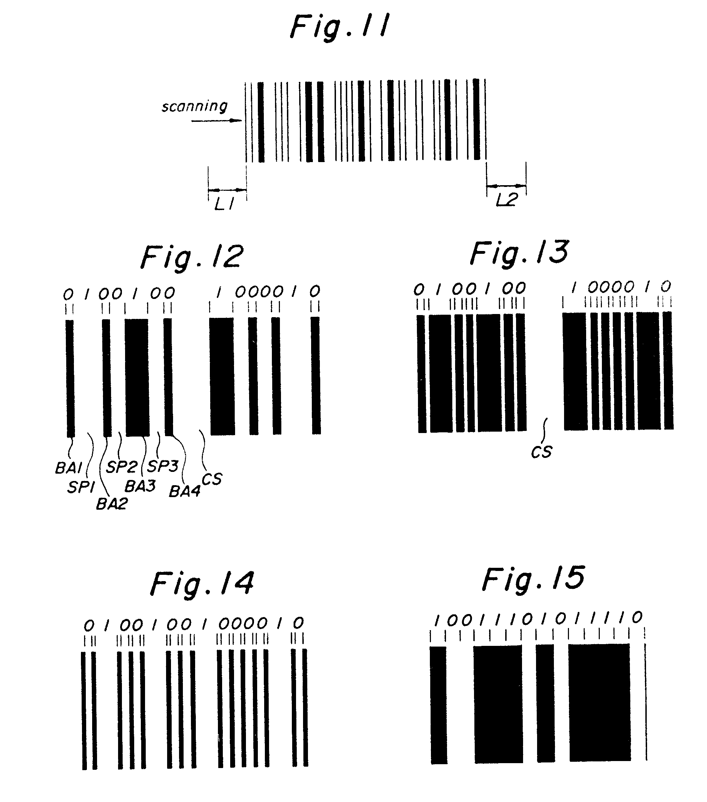

The portions of the bar code indicated by CS in Figs. 12 and 13 represent the space between characters. No inter-character spaces, however, appear in Figs. 14 and 15.

Different methods have been employed for reading these bar codes. A first reading method comprises the steps of scanning the code pattern with an optical reader to obtain numerical counts representing bar and space widths, and comparing the obtained counts with a fixed reference value to determine the binary digits represented thereby.

A second reading method appropriate for reading such a bar code as shown in Fig. 12 comprises the steps of: scanning the bar code with an optical reader to count bar and space widths sequentially, comparing the count of the bar width which the optical reader reads first with the count of the space width adjacent to the first bar to determine the binary digit represented by the first bar; or, likewise, comparing the count of the space width which the optical reader reads first, with the count of the bar width adjacent to the first space to determine the binary digit represented by the space, and so on.

The first reading method uses a fixed reference value, and the count corresponding to the bar and space widths varies with the speed at which the optical reader scans the combinations of bars and spaces. In this connection the speed at which the optical reader scans the bar codes must be controlled within certain limits, otherwise there will be considerable reading error. Such reading errors have been particularly high with manual sweeping.

As for the second reading method, theoretically it cannot be used to read such a bar code as shown in Fig. 15. In reading the bar code of Fig. 15 the counts of bar and space widths are sequentially compared with each other to determine the binary digits represented thereby. Therefore, if the printing should be somewhat blurred, an optical reader will read a wrong content from the blurred pattern. In an attempt to solve these problems, a reading method which is deemed to be most appropriate for reading bar codes as shown in Fig. 12 has been proposed in Japanese Laid-Open Patent Application No. 57-34540 (Patent Application No. 47-113058). In the reading method as proposed, bars are selected and compared with each other in terms of their widths, and likewise spaces are selected and compared with each other in terms of their widths. Specifically, the counts of two subsequent bar widths are compared with each other to determine which one is larger in value, and then the larger one (or thicker bar) is deemed to represent binary "1" whereas the smaller one (or thinner bar) is deemed to represent binary "0". Likewise, two subsequent space widths are compared with each other to determine which one is larger in value, and then the larger one (or wider space) is deemed to represent binary "1" whereas the smaller one (or thinner space) is deemed to represent binary "0".

The proposed method, however, requires that subsequent bars (or spaces) be different in width. In order to meet this requirement a variety of bar and space widths must be used. This, however, makes it difficult to increase the density with which bars are printed or to reduce the bar code to a simpler form. In an attempt to solve this problem the inventor of Laid-Open Patent Application No. 57-34540 mentioned earlier made another invention (Patent Application Laid-Open No. 55-49354; Patent Application No. 48-34732). This invention can be applied to a bar code composed of bars (or spaces) of equal width to determine binary digits represented by bars (or spaces) with accuracy. Specifically, according to this new method the width of a bar (or space) selected as a standard is defined as a first value; the value of a bar (or space) width to be determined is multiplied by a constant K which is larger than one, and the multiplied count is defined as a second value; the object count is divided by K and is defined as a third value; and then a determination as to which binary number the object bar (or space) represents, zero or one, is made as follows:
(1) if the first value is larger than the second value, the object bar (or space) is thin, and it represents binary "0";
(2) if the first value is smaller than the third value, the object bar (or space) is thick, and it represents binary "1"; and
(3) if the first value is smaller than the second value but larger than the third value, the standard bar and the object bar are deemed to be equal in width, and a binary determination is deferred until the comparison of the counts of the next bar and space widths is completed.

The third reading method which is a combination of the two reading methods submitted for patent, is free of the disadvantage of having to control the sweeping speed of the optical reader, and of erroneous reading which would be otherwise caused by blurring in the printing.

It does however have the following defect:
Assuming that the width ratio of thin bar (or space) to thick bar (or space) is equivalent to 1 : 2, and that the most appropriate value for the constant "K" is 1.5; and again, assuming that a thick bar is partly blurred or defective so that the width ratio is equal to about 1 : 1.4, in this case the first value = N = 1; the second value = 1.4NK = 2.10N; and the third value = 1.4N/K = 0.93N, where "N" stands for the value of width at the ratio of one. As a consequence, the second value > the first value > the third value appears instead of the correct second value > the third value > the first value. The same error appears in respect of spaces, too. Also disadvantageously, the third reading method cannot be applied to a bar code as shown in Fig. 15, as is the case with the second reading method.

A reading method which is exclusively applied to a bar code of Fig. 15 comprises the steps of: obtaining a value corresponding to the width of a single module by scanning a start bar (not shown) with an optical reader, and making a decision as to which element (bar or space) each subsequent module belongs to, on the basis of the module value count every time an optical reader scans the module, thereby determining whether the binary number is "1" or "0".

This reading method, however, requires that an optical reader scans the code at a constant speed, and therefore erroneous readings are often caused when the optical reader is moved by hand.

EP-A2080152, which is a document in the meaning of Article 54 (3) EPC describes a bar code reading method and apparatus. According to said state of the art comparison reference values are calculated on the bases of zone values that correspond to the widths of bar-and-space zones making up a bar code pattern, and pre-stored constants, the width of said zones being determined thereby. In particular, each of the zone width values is compared with a comparison reference value, which is a type of average and which, in turn, is calculated with the zone width values and the afore-mentioned given constant.

As may be understood from the above, all the conventional reading methods are unsatisfactory.

### OBJECTS OF THE INVENTION

One object of the present invention is to provide a method of reading bar codes without the necessity of keeping the optical reader scanning at a constant speed, while still assuring correct readings irrespective of slight increases or decreases in bar and space widths.

Another object of the present invention is to provide an apparatus for reading bar codes without the necessity of keeping an optical reader scanning at a constant speed, while still assuring correct reading irrespective of slight increases or decreases in bar and space widths.

### OUTLINE OF THE INVENTION

In the present invention a comparison reference value is calculated from a zone value representing the width of each zone constituted by a bar or space and a given constant; each zone value is compared with the comparison reference value; and finally the width of each zone is determined from a decision as to which value is larger, the zone value or the comparison reference value.

These and other objects and advantages of the present invention will be understood from the following description which is made with reference to the accompanying drawings.

### BRIEF DESCRIPTION OF THE DRAWINGS

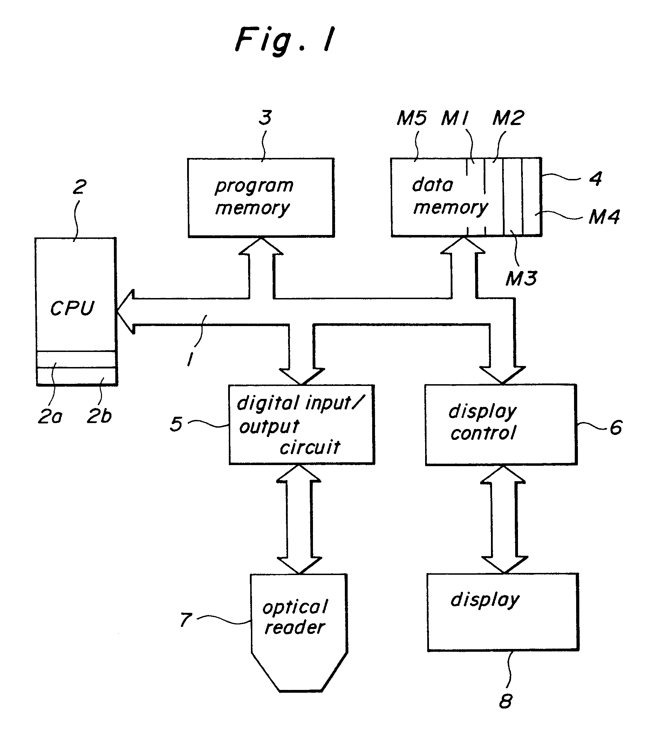

Fig. 1 is a block diagram representing a bar code reading apparatus according to the present invention;

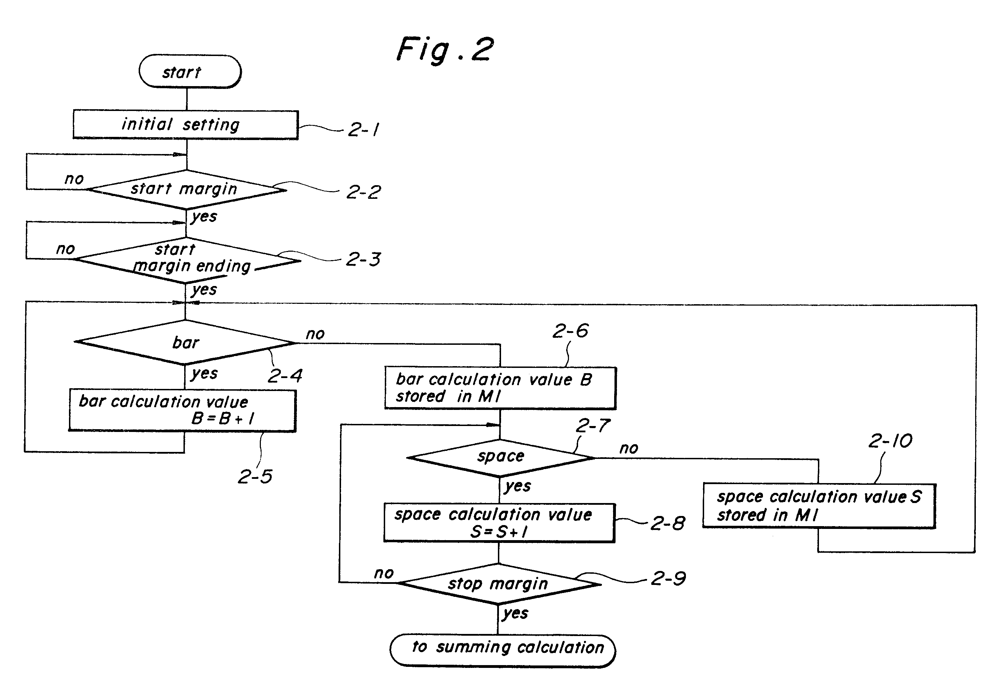

Fig. 2 is a flowchart showing the counting process;

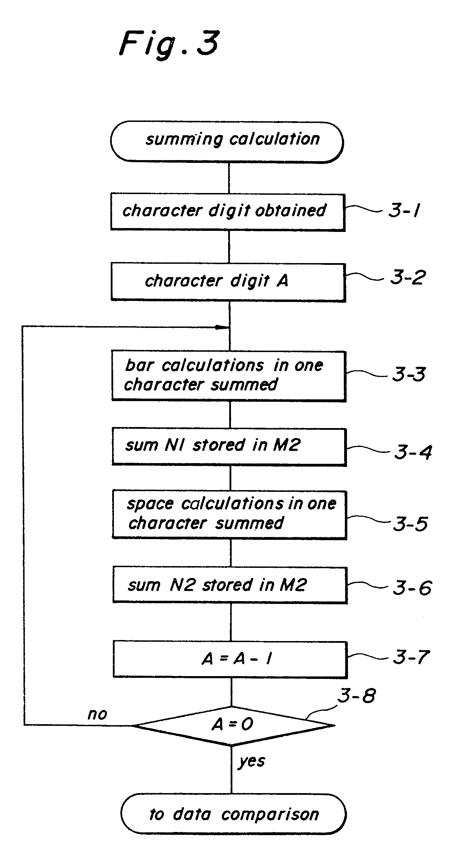

Figs. 3, 6, 7 and 9 are flowcharts showing the sum value computation process;

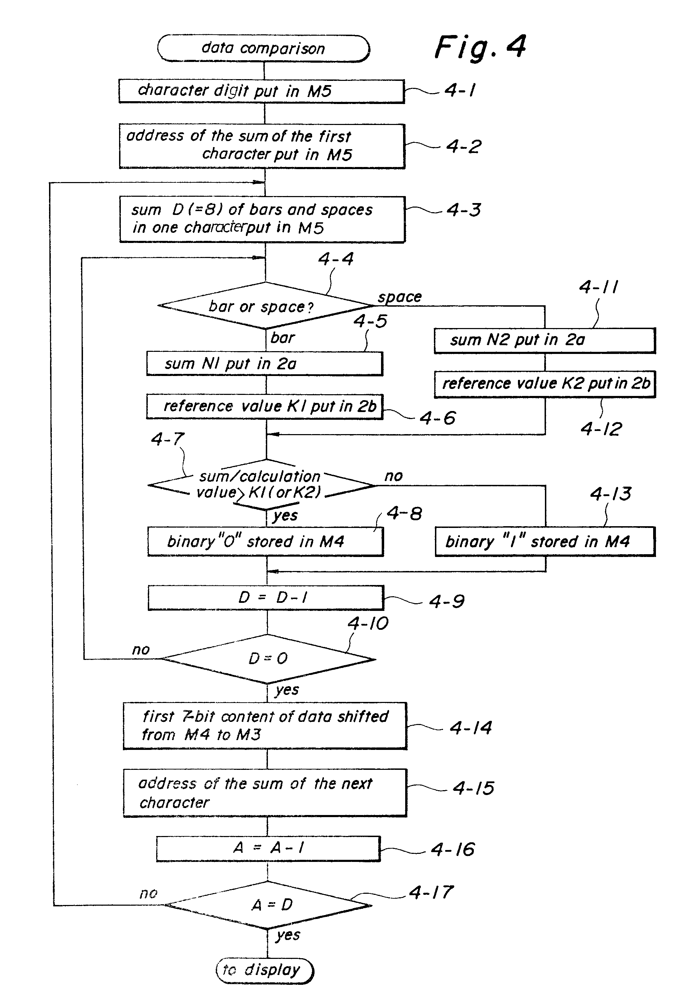

Figs. 4, 8 and 10 are flowcharts showing the data comparison process;

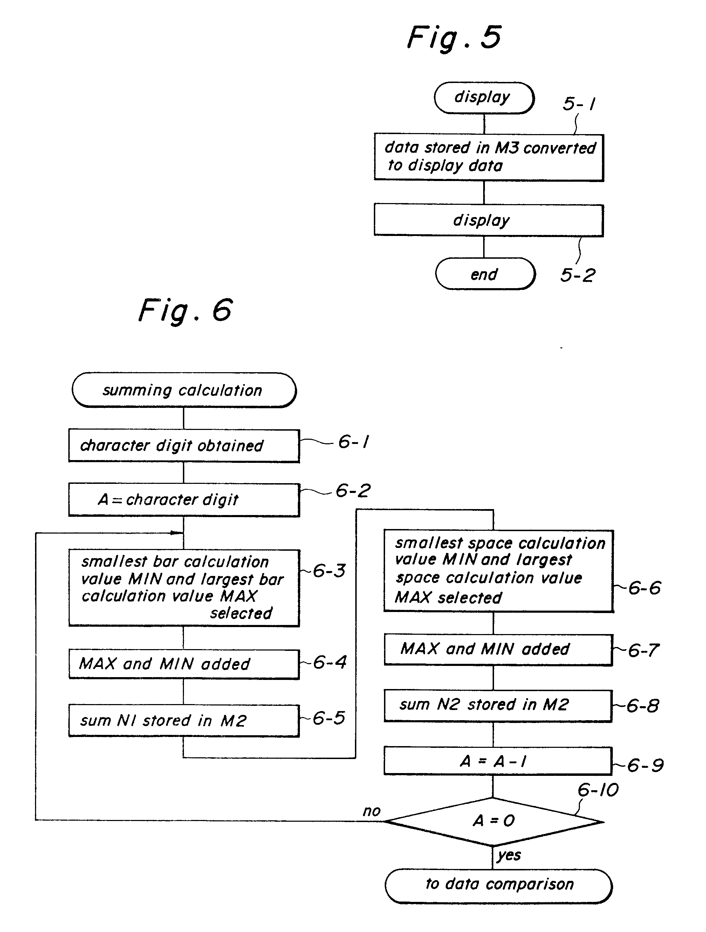

Fig. 5 is a flowchart showing the display operation process;
Fig. 11 shows a bar code; and
Figs. 12, 13, 14 and 15 show a variety of bar code arrangements;

### DESCRIPTION OF THE PREFERRED EMBODIMENTS

In Fig. 1, a bar code reading apparatus according to the present invention comprises a central processing unit 2, a program storage 3, a data storage 4, a digital input and output circuit 5 and a display control 6 all linked together by a bus 1. The central processing unit (hereinafter abbreviated to "CPU") 2 is designed to control the operation of the whole apparatus according to a program stored in the program storage 3, which is composed of a read-only memory (hereinafter abbreviated to "ROM"). The data storage 4 is composed of a random access memory (hereinafter abbreviated to "RAM"), and includes a binary element or zone width memory M1, a sum value memory M2, a read-out data memory M3, a temporary memory M4 and a miscellaneous data memory M5.

As shown, an optical reader 7 which is designed to be moved across bar codes by hand is connected to the digital input and output circuit 5. This circuit 5 is designed to detect which binary element the optical reader is moving across, a bar zone or space zone, and supply to the bus 1 a binary signal representing which zone the optical reader is crossing. The display control 6 is designed to translate bar code data retrieved from the read-out data memory M3 for display on a cathode-ray tube or any other such display means 8.

The method of reading bar codes by means of the bar code reading apparatus of Fig. 1 will now be described.

The bar codes of Figs. 12 to 15 differ in their binary expression modes, as already described, and accordingly different read recognition modes are employed. First, the bar code of Fig. 12 will be described. Assume that the bar code of Fig. 12 contains as many characters as required, thus presenting the same appearance as the one in Fig. 11. The bar code is composed of combinations of thin and thick bars and thin and thick spaces. Again, assume that the width ratio between thin bar, thick bar, thin space and thick space is 1 : 3 : 2 : 4.

In Fig. 2, the flowchart shows the sequence of computing counts corresponding to the width of the bar and space zones in the bar code and storing the resultant counts.

First, each circuit appearing in Fig. 1 is initialized. A decision is then made as to whether or not the optical reader 7 has finished traversing the blank space corresponding to the start margin L1 (Fig. 11). In the affirmative case a decision is made at Step 2-4 as to whether the optical reader 7 is crossing the printed bars. If the scan of the start margin L1 has been finished, it means the optical reader 7 has started scanning the printed bars, and one is added to the count in a register 2a of the CPU 2. As a result, the value, which was zero at Step 2-1, is now one. While the optical reader is crossing the first bar BA1, Steps 2-4 and 2-5 are repeated, thus calculating the width of the first bar BA1. When the scan of the first bar BA1 has finished, the bar count is shifted from the register 2a to the zone width memory M1 at Step 2-6, and the register is reset to zero.

Next, a decision is made as to whether the optical reader is traversing a space. In the affirmative case one is added to the space count and it is stored in the register 2a, which therefore now shows one. A decision is made as to whether the space count has reached the width value of the stop margin L2 in Fig. 11. In the negative case Steps 2-7 to 2-9 are repeated to measure the width of the first space SP1. When the sweep of the first space SP1 by means of the optical reader has finished, the calculation value S of the first space is shifted from the register 2a to the zone width memory M1 at Step 2-10, and at the same time, the register 2a is reset to zero. Then, the set-up reverts to Step 2-4. Likewise, the widths of the second and subsequent bars BA2, BA3, ... are calculated from Steps 2-4 to 2-6, and the results of calculations representing the widths of the second and subsequent bars are stored in the zone width memory M1.

Also, the widths of the second and subsequent spaces SP2, SP3, ... are calculated from Steps 2-7 to Step 2-10, and the results of calculations representing the widths of the second and subsequent spaces are stored in the zone width memory M1. Thus, the widths of all the bars and spaces appearing in the whole bar code are measured and stored. When the optical reader 7 has reached and measured the zone width of the stop margin L2 in Fig. 11, the sweep of the whole bar code is regarded as having finished, and then the total calculation process follows. It should be noted that in the bar calculations one is added to the register 2a in each loop from Step 2-4 to Step 2-5, and in the space calculations one is added in each loop from Step 2-7 to Step 2-9 via Step 2-8. In an attempt to put these bar and space calculation steps into conformity with each other, preferably one extra pseudo-step is added to Step 2-5.

When the bar and space calculations have finished, the widths of the bars and spaces appearing in the whole bar code are stored in the zone width memory M1.

At first in totalling bar and space calculation values the character digit A of the whole bar code is obtained at Step 3-1 (see Fig. 3). The character digit A represents the number of the characters contained in the whole bar code, and the character digit A thus obtained is stored in a predetermined address of the memory M5.

The calculation values of the four bars contained in the first character are totalled, and the sum N1 is stored in the total memory M2. Next, the calculation values of the three spaces contained in the first character are totalled, and the sum N2 is stored in the total memory M2.

When the totals N1 and N2 of the bars and spaces together constituting the first character have been calculated, one is subtracted from the character digit A. Then, a decision is made as to whether or not the character digit A is zero. In the negative case Steps 3-3 to Step 3-8 are repeated, thereby performing the totalling of the calculation values of the bars and spaces contained in the second and subsequent characters, and thereafter the respective totals are stored in the total memory M2. In contrast, in the affirmative case, that is, if the character digit A is found to be zero, the totalling of the calculation values of the bars and spaces in the whole bar code are deemed to have finished, and data comparison follows.

Now, the operation of effecting comparison of bar and space data by using the totals N1 and N2 just obtained will be described below with reference to Fig. 4.

First, the character digit A and the addresses of the total memory M2 at which the totals N1 and N2 of the first character are stored are put in the memory M5 at Step 4-1. Thereafter, the total (D = 8) of the numbers of the bars and spaces in one character is put in a predetermined address of the memory M5 at Step 4-3. Here, it should be noted that the total is made by adding an extra one representing the inter-character space to the total of bars and spaces (= 7).

A decision is made as to which element the first calculation value represents, bar or space (at Step 4-4). If it represents a bar, an access is made to the address of the memory M5 at which total N1 of the bar calculation values in the first character is stored, and then the total N1 is shifted from the total memory section M2 to the register 2a in the CPU2.

Next, at Step 4-6 a bar reference value K1, which is stored beforehand in the program memory 3, is put in the register 2b of the CPU2. After putting the reference value K1 in the register 2b, the bar calculation value total N1 of the first character is divided by the calculation value BA1 of the first bar at Step 4-7, and then a decision is made as to which value is larger, the quotient or the bar reference value K1. If the quotient is larger than the reference value K1, the first bar is determined as representing a binary "0". Otherwise, if the quotient is smaller than the reference value K1, the first bar is determined as representing a binary digit "1". These binary data "1" and "0" are stored in a temporary memory M4. In the example given in Fig. 12 the first bar BA1 is thin, and therefore the quotient is larger than the reference value K1. Then, a binary digit "0" represented by the first bar is stored in the temporary memory M4.

After one is subtracted from D, a decision is made as to whether or not D is equal to zero. In the negative case the set-up reverts to Step 4-4. Then, the address of the memory M5 at which the total N2 of the spaces in the first character is stored is referred to, and the total N2 is shifted to the register 2a of the CPU2.

Thereafter, the space reference value K2 is shifted from the program memory 3 to the register 2b of the CPU2 at Step 4-12. Then, the total N2 of the calculation values of the space contained in the first character is divided by the calculation value of the first space SP1, which is stored in the zone width memory M1. Then, a decision is made as to which is larger, the quotient or the reference value K2. If the quotient is larger than the reference value K2, the first space is determined as a binary "0". Otherwise, if the quotient is smaller than the reference value K2, the first space is determined as a binary "1". The binary "0" or "1" thus determined is stored in the temporary memory M4. As for the example shown in Fig. 12, the first space SP1 is broad, and the quotient is not larger than the reference value K2, and so a binary "1" is stored, and at the same time, one is subtracted from D before the set-up proceeds to Step 4-10. These proceedings are repeated to perform comparisons with respect to the bars, spaces and inter-character space in the first character.

It should be noted that the reference value K1 is set intermediately between the quotient obtained by dividing the bar total N1 by the thin bar calculation value and the quotient obtained by dividing the bar total N1 by the thick bar calculation value, and that the reference value K2 is set about intermediate between the quotient obtained by dividing the space total N2 by the thin space calculation value and the quotient obtained by dividing the space total N2 by the thick space calculation value.

After finishing the bar and space data comparison, D is found to be equal to zero at Step 4-10. Then, the first seven-bit content of the data of one whole character stored in the temporary memory M4, that is, the content of the data of one whole character excluding only the inter-character space, is stored in the read data memory M3. The address data of the totals of the first character are cleared at Step 4-15, and the address data of the totals of the subsequent character are put in the memory M5. One is subtracted from the character digit A at Step 4-16. Then, a decision is made as to whether the character digit A is zero or not at Step 4-17. In the negative case Steps 4-3 to Step 4-17 are repeated, thereby performing comparisons with regard to the bar and space data of subsequent characters. The data obtained by these comparisons are stored in the read data memory M3 in a predetermined order. The last character has no inter-character space CS, and therefore the total D of the numbers of the bars and spaces in the last character is seven. Therefore, the eighth binary digit determined at Step 4-7 has no significance. No problem, however, will be caused because this eighth binary digit will be discarded at Step 4-1. When comparisons of the bar and space data of all the characters are finished and when the data thus obtained are stored, the character digit A goes to zero, and the display proceedings start.

In the display proceedings as shown in Fig. 5 data are retrieved, each seven-bit in length, from the read data memory M3, and are converted to display data, which are stored in the display control circuit 6. Then, a CRT or any other display device 8 shows the contents of the display data under the control of the display control circuit 6.

In the first example described above a decision is made as to which binary digit, "1" or "0", each bar and space represents by totalling the calculation values of the bars and spaces in each character, dividing the total by each bar calculation value and by each space calculation value respectively, and by comparing the respective quotients with given reference values K1 and K2 respectively.

A binary digit of each bar and space can be determined according to another method which is described below with reference to a second example.

The second example is different from the first one only in the totalling of bar and space calculation values; the zero width calculation, the data comparison and the display operation are the same as described above in the first example with reference to Figs. 2, 4 and 5, and therefore the descriptions thereof are omitted.

As for the totalling calculation, a character digit A is determined on the basis of the bar and space calculation values stored in the zone width memory M1, and the character digit A thus determined is stored in a predetermined address of the memory M5. Then, the largest calculation value MAX and the smallest calculation value MIN are selected from among the bar calculation values of the first character at Step 6-3. The largest and smallest calculation value MAX and MIN are added together at Step 6-4, and the total N1 is stored in the total memory M2 at Step 6-5. The largest calculation value MAX and the smallest calculation value MIN are selected from among the space calculation values of the first character at Step 6-6. Then, the largest and smallest calculation values MAX and MIN are totalled at Step 6-7, and the total is stored in the total memory M2 at Step 6-8.

Next, one is subtracted from the character digit A and a decision is made as to whether or not the character digit A is zero, at Step 6-10. In the negative case, Steps 6-3 to Step 6-10 are repeated, thereby calculating bar and space totals N1 and N2 with regard to the second, third and subsequent characters. When the totalling with regard to all the characters are finished, the character digit A is zero. Then, the data comparison described above with reference to Fig. 4 starts.

In this particular example the largest and smallest calculation values MIN and MAX of the bar and space calculation values are selected, and the totals N1 and N2 are calculated by totalling these largest and smallest calculation values. However, if one thick element and three thin elements together constitute one character, the totals N1 and N2 may be determined by totalling the largest calculation value and one situated in a predetermined order.

In the first and second examples the bar and space totals N1 and N2 must be determined for each and every character. In contrast, in the third example which is to be described below, a single bar total N1 and a single space total N2 may be used in common, and a binary digit may be determined for each bar and space on the basis of these single totals N1 and N2. In the third example the bar and space widths may be calculated in the same way as described above in the first and second examples with reference to Fig. 2.

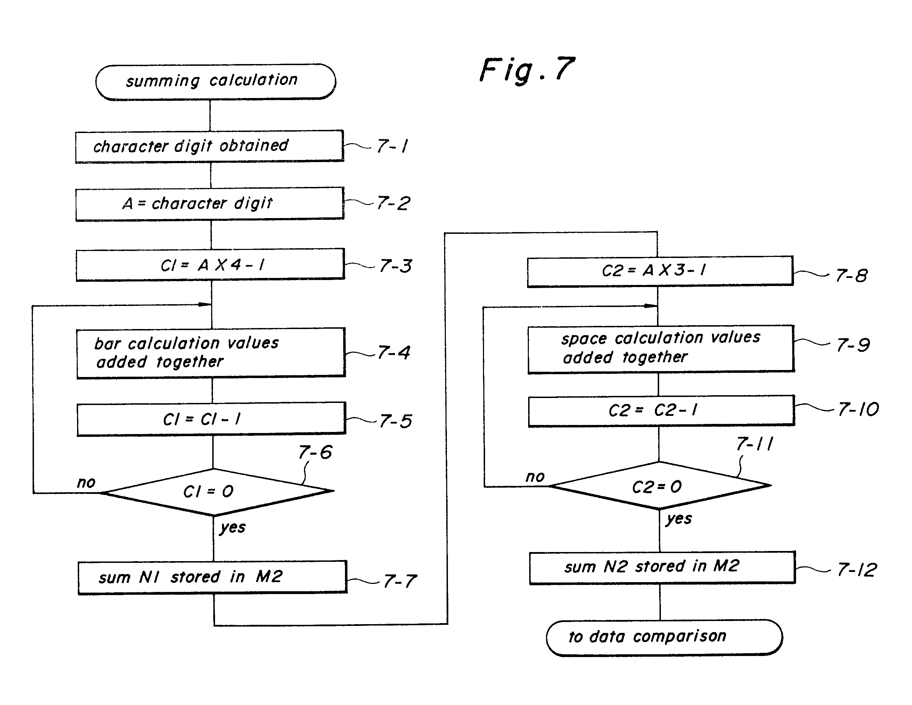

Fig. 7 shows the totalling proceedings. As is described above with reference to Figs. 3 and 6, a character digit A is determined, and then it is put in a predetermined address of the memory M5. Next, at Step 7-3, the character digit A is multiplied by the number (= 4) of the bars contained in one character, and then one is subtracted from the product, thus providing the number of times of addition of C1, the value of which corresponds to the total of the bar widths in the whole bar code. Then, the number of times of addition of C1 is stored in the memory M5.

At Step 7-4 the calculation values of the first and second bars are added together, and the total is put in a predetermined address of the memory M5. One is subtracted from the number of additions and a decision is made as to whether or not C1 is equal to zero, at Step 7-6. In the negative case, the calculation value representing the width of the next bar is added to the total calculated at Step 7-4. Steps 7-4 to Step 7-6 are repeated to perform addition of the calculation values of the remaining bars in the whole bar code until C1 has come to zero. When C1 is zero, the total N1 is stored in the total memory M2.

At Step 7-8 the character digit A is multiplied by 3, that is, the number of the spaces contained in one character, and one is subtracted from the product, thereby providing the number of C2 additions, the value of which corresponds to the total of the calculation values of the space widths in the whole bar code. Then, the number of C2 additions is stored in a predetermined address of the memory M5.

Next, the calculation value of the first space and the calculation value of the second space are added together, and the total is put in a predetermined address of the memory M5 at Step 7-9. Then, one is subtracted from the number of C2 additions whether or not C2 is equal to zero at Step 7-11. In the negative case the set-up reverts to Step 7-9, and the calculation value of the next space is added to the total already stored in the memory M5. Steps 7-9 to Step 7-11 are repeated until the calculation values of the spaces contained in the whole bar code have been added together, and the result of addition is stored in a predetermined address of the memory M5. When the addition of the calculation values of all the spaces is finished, C2 is equal to zero, and the total N2 is stored in the total memory M2. Then, the data comparison starts.

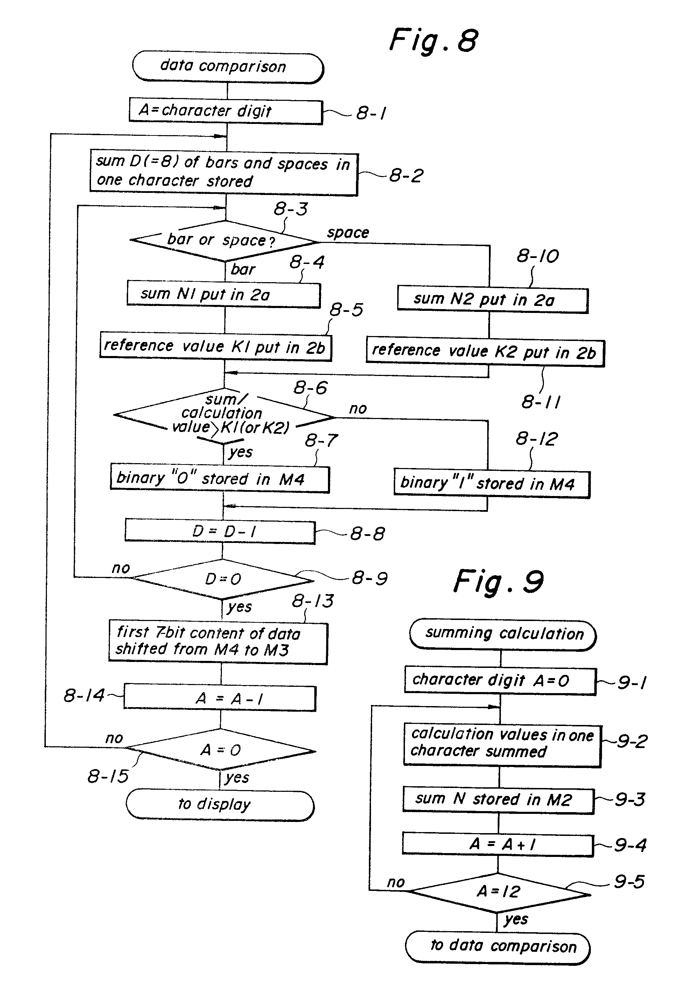

The data comparison in the third example is different from that in the first and second example, and is described below with reference to Fig. 8. First, the character digit A is put in the memory M5. At Step 8-2 the numbers of the bars and spaces contained in one character and the number of the inter-character spaces are added together, and the total (= 8) is stored in a predetermined address of the memory M5. Then, a decision is made as to which element the first calculation value stored in the zone width memory M1 represents, bar or space, at Step 8-3. If it represents a bar, the bar total N1 is shifted from the total memory M2 to the register 2a in the CPU2. Next, at Step 8-5 the bar reference value K1 is shifted from the program memory 3 to the register 2b in the CPU2. When the reference value K1 is put in the register 2b, the bar total N1 is divided by the calculation value of the first bar BA1, and then a decision is made as to whether or not the quotient is larger than the bar reference value K1 at Step 8-6. If the quotient is larger than the reference value K1 the first bar is determined as representing a binary "0". Otherwise, if the quotient is not larger than the reference value K1, the first bar is determined as representing a binary "1". In either case the result of the determination is stored in the temporary memory M4.

Then, one is subtracted from D, and a decision is made as to whether or not D is equal to zero at Step 8-9. In the negative case, the set-up reverts to Step 8-3, where a decision is made as to which binary element the next calculation value in the zone width memory M1 represents, bar or space. If it is found to represent space, the space total value N2 is shifted from the total memory M2 to the register 2a of the CPU2. The reference value K2 is put in the register 2b of the CPU2 at Step 8-11, the space total N2 of the first character is divided by the calculation value of the first space, and then a decision is made as to whether or not the quotient is larger than the reference value K2 at Step 8-6. In the affirmative case the space is determined as representing a binary "0". Otherwise, in the negative case the space is determined as representing a binary "1". In either case the result of the determination is stored in the temporary memory M4.

In this way all the bars and spaces in the whole bar code as shown in Fig. 11 are subjected to comparison one after another. It should be noted that the reference value K1 is set about intermediate between the quotient obtained by dividing the bar total value by the calculation value of the thin bar and the quotient obtained by dividing the bar total value by the calculation value of the thick bar and that the reference value K2 is set about intermediate between the quotient obtained by dividing the space total by the calculation value of the thin space and the quotient obtained by dividing the space total by the calculation value of the thick space.

When the comparisons of all the bars and spaces have finished, D reduces to zero. At Step 8-13 the contents of the first seven-bit data, that is, the data of all the bars and spaces excluding the inter-character space CS, are stored in the read data memory M3. Then, one is subtracted from the character digit A at Step 8-14. Next, a decision is made as to whether or not the character digit A is zero at Step 8-15. In the negative case, Steps 8-2 to Step 8-15 are repeated to perform comparisons of each bar and space in the second, third and subsequent characters. When the comparisons of all the bars and spaces in the whole bar code have finished, the character digit A reduces to zero, and then the display proceedings as described above with reference to Fig. 5 follow.

In the first, second and third examples the present invention is described as being applied to reading a bar code composed of thin and thick bars and thin and thick spaces, thin ones representing a binary "1" and thick ones representing a binary "0", as, for instance, shown in Fig. 12. The present invention, however, can be equally applied to a bar code composed of thin and thick bars and thin (or thick) spaces (Fig. 13) and a bar code composed of thin and thick spaces and thin (or thick) spaces (Fig. 14).

In case of applying the present invention to reading a bar code composed of thin and thick bars and thin (or thick) spaces, the total calculation of spaces and the comparison of space data may be omitted. Specifically, Steps 3-5 to Step 3-6 may be omitted in Fig. 3, and Steps 6-6 to Step 6-8 may be omitted in Fig. 6, and finally, from Steps 7-8 to Step 7-12 may be omitted in Fig. 7. As for the data comparison given in Fig. 4, Steps 4-4, 4-11, 4-12 and 4-14 may be omitted, and D is set at 7 at Step 4-3. At Steps 4-8 and 4-13 a binary "1" or "0" may be stored directly in the read data memory M3. As for the data comparison given in Fig. 8, Steps 8-3, 8-10, 8-11 and 8-13 may be omitted, and at Step 8-2 D is set at 7. A binary "1" or "0" may be stored directly in the read data memory M3 at Steps 8-7 and 8-12.

If the present invention is applied to reading a bar code composed of thin and thick spaces and thin (or thick) bars, the bar totalling and the bar data comparison may be omitted. Specifically, in the same way as the space totalling and the space data comparison are omitted in reading a bar code composed of thin and thick bars and thin (or thick) spaces, the bar totalling and the bar data comparison may be omitted.

The present invention may be equally applied to a bar code composed of bars and spaces each having three different widths by selecting two or more reference values beforehand, for instance as follows: a first reference value is set about intermediate between the calculation value of the thin element and the calculation value of the intermediate element, and a second reference value is set about intermediate between the calculation value of the intermediate thick element and the calculation value of the thick element. Then, in the data comparison each element zone width is determined as to which binary digit it represents by comparing it with the first and second reference values to determine which is larger.

In the above examples the present invention is described as applying to a bar code whose thick and thin element zones represent binary digits "1" and "0", respectively. The present invention, however, can be equally applied to a bar code in which each character is composed of seven modules, and at the same time of two bars and two spaces of different widths, each module of the bar width representing a binary "1" and each module of the space width representing a binary "0" (see Fig. 15).

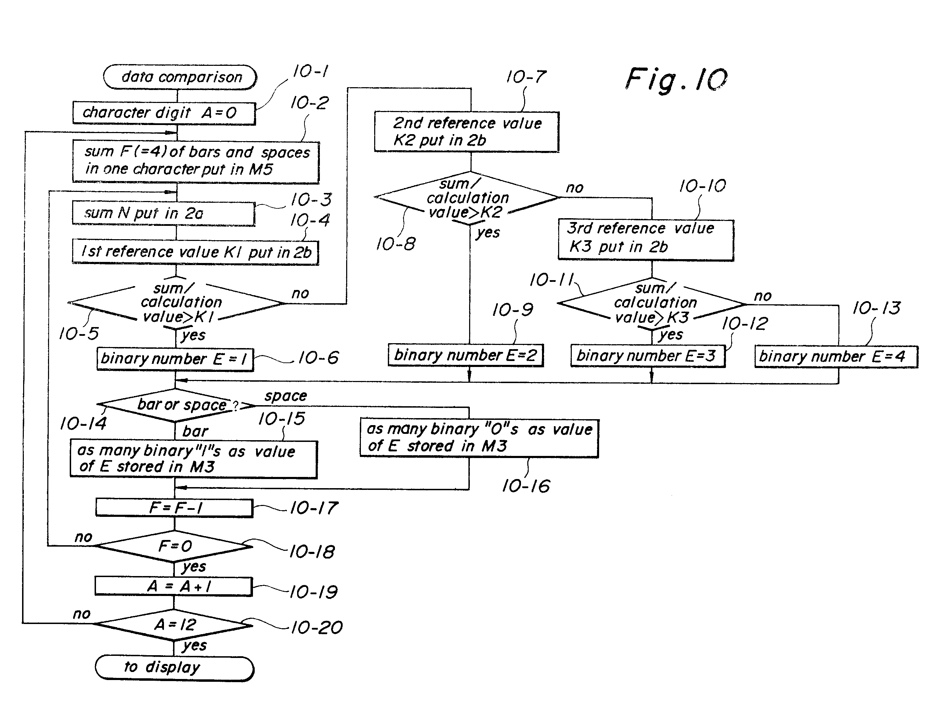

The way of reading such a bar code as shown in Fig. 15 is described below with reference to Figs. 9 and 10. It is assumed that the bar code is composed of one-to-four module wide bars and spaces.

The determination of each bar and space zone is conducted in the same way as described above with reference to Fig. 2. The totalling calculation is conducted, and the character digit A (= 0) is put in a predetermined address of the memory M5 at Step 9-1.

Next, the calculation values of the bars and spaces in the first character are totalled at Step 9-2, and the total N is stored in the total memory M2 at Step 9-3. Then, one is added to the character digit A, and a decision is made as to whether the character digit A is 12 or not at Step 9-5. It should be noted that the character digit A is set at a fixed value of twelve, and that this value is put in the program memory 3 or the read data memory 4, specifically the memory M5. If the character digit is not equal to 12, the set-up reverts to Step 9-2, and the total N of the next character is obtained and stored in the total memory M2. Likewise, the totals of the remaining characters are performed until the character digit A increases to 12. Then, the data comparison follows.

The data comparison is described below with reference to Fig. 10. First, the character digit A (= 0) is put in a predetermined address of the memory M5 at Step 10-1. On the other hand, the total F (= 4) of the bars and spaces in a single character is put in a predetermined address of the memory M5 at Step 10-2.

At Step 10-3 the total N of the first character is put in the register 2a of the CPU2, and the largest reference value K1 is selected and shifted from the program memory 3 to the register 2b in the CPU2 at Step 10-4. Thereafter, the total N is divided by the first calculation value stored in the zone width memory M1, and a decision is made as to which value is larger, the quotient or the first reference value at Step 10-5. If the quotient is larger than the first reference value K1, the element is decided to be as wide as one module, and then a binary number E (= 1) is put in a predetermined address of the memory M5. Otherwise, if the quotient is not larger than the first reference value K1, the second reference value K2, medium reference value, is put in the register 2b at Step 10-7.

Then, a decision is made as to whether the quotient is larger than the second comparison value K2 or not at Step 10-8, and in the affirmative case the element is decided to be as wide as two modules, and accordingly a binary number E (= 2) is put in a predetermined address of the memory M5. If the quotient is not larger than the second reference value K2, the smallest or third reference value K3 is put in the register 2b.

At Step 10-11 a decision is made as to whether the quotient is larger than the third comparison value K3 or not. In the affirmative case the element is decided to be as wide as three modules. Then, a binary number E (= 3) is put in a predetermined address of the memory M5. Otherwise, in the negative case the element is decided to be as wide as four modules, and then a binary number E (= 4) is put in a predetermined address of the memory M5.

It should be noted that the first reference value K1 is set about intermediate between the quotient obtained by dividing the total by the calculation value of the bar or space of one module and the quotient obtained by dividing the total by the calculation value of the bar or space of two modules; reference value K2 is set about intermediate between the quotient obtained by dividing the total by the calculation value of the bar or space of two modules and the quotient obtained by dividing the total by the calculation value of the bar or space of three modules; and the third reference value K3 is about intermediate between the quotient obtained by dividing the total by the calculation value of the three module wide bar or space and the quotient obtained by dividing the total by the calculation value of the four module wide bar or space. Next, at Step 10-14 a decision is made as to which element the calculation value represents, bar or space. If it represents bar, binary "1"s of the number corresponding to the binary number E are stored in the read data memory M3. Likewise, if it represents space, binary "0"s of the number corresponding to the binary number E are stored in the read data M3. One is subtracted from the total F of the bars and spaces, and then a decision is made as to whether the total F is equal to zero or not. In the negative case Steps 10-3 to Step 10-18 are repeated, thereby performing comparisons of the calculation values of the bars and spaces remaining in the whole character. When the comparisons of the whole character has finished, F reduces to zero, and one is added to the character digit A. Thereafter, a decision is made as to whether the character digit A is 12 or not at Step 10-20. In the negative case Steps 10-2 to Step 10-20 are repeated, thereby performing comparisons of the calculation values of the bars and spaces remaining in the whole character. When these comparisons have finished, the character digit A is 12. Then, the display proceeding given in Fig. 5 follows.

A bar code of the type shown in Fig. 15 must be printed clearly. In this connection any deviation of the binary element (bar or space) from its exact width is limited to a strictly prescribed ratio. Thus, in reading a bar code as shown in Fig. 15, both of the bar and space calculation values may be totalled into a single total in place of separate totalling of the bar and space calculation values. Then, the composite total may be used in common in comparisons of the bar and space data. The common use of the composite total may be allowed in reading a bar code as shown in Fig. 12, provided that any deviation of each binary element from its exact width is limited to a strictly prescribed ratio. Otherwise, if the printing should be somewhat blurred, the composite total cannot be used.

In the examples described above a decision as to which a bar or space represents, binary "0" or "1", is made by dividing a bar or space total by the calculation value of the bar or space width and by comparing the quotient thus obtained with a bar or space reference value. Such a decision, however, may be made by dividing the calculation value of a bar or space width by the bar or space total and by comparing the quotient with an appropriate reference value, which, as a matter of course, are different from those used in the above examples, and the inequality relationships between the quotients and the reference value are just the reverse of those in the above examples.

A bar code reading apparatus according to the present invention may be designed to apply exclusively to a particular one selected among the bar codes as shown in Figs. 12 to 15, or in common to all of these bar codes. In this latter case a bar code reading apparatus may be provided with means for determining which type of bar code is to be read, and then the apparatus may perform the totalling calculations and data comparisons as required according to the type of bar code thus determined. As an example for such means for determining which type of bar code is to be read a plurality of switches may be used, each being allotted to a particular type bar code, and then an operator may select a particular switch among them and operate the selected one, thereby indicating which type bar code is to be read. Alternately, an automatic determining means may be provided, which is capable of making an identification from the start or end codes of a bar code, although such is not shown in Fig. 11.

As may be understood from the above, in the present invention an optical reader is moved across a bar code by hand to determine and store values each representing a bar or space width; selected numbers of calculation values among the stored values are totalled together; the resultant totals are divided by individual calculation values; the quotients thus obtained are compared with given reference values; and a decision as to which binary digit, "1" or "0", each calculation value represents is made on the basis of the inequality relationship found in the result of comparison. Thus, a bar code can be read accurately, independently of the scanning speed of the optical reader and any inaccurate or blurred printing of the bar code.

## Claims

1. Method of reading a bar code composed of an alternating bar-and-space arrangement with at least one of the binary elemental zones being of two or more different widths, comprising the steps of moving an optical reader (7) across the alternating bar-and-space arrangement to measure each binary elemental zone width and store the measured calculation values of said bars and spaces;
totalling all or a selected number of the calculation values representing the binary elemental zone widths;
dividing the resultant total by the value representing either binary elemental zone width;
comparing each quotient with a predetermined reference value; and
making a decision as to which binary digit, "0" or "1", each elemental zone width represents on the basis of the result of comparison.

2. Bar code reading method according to claim 1 wherein only bars are of two or more different widths.

3. Bar code reading method according to claim 2 wherein the totalling is conducted exclusively on the basis of calculation values representing the bar widths.

4. Bar code reading method according to claim 1 wherein only spaces are of two or more different widths.

5. Bar code reading method according to claim 4 wherein the totalling is conducted exclusively on the calculation values representing the space widths.

6. Bar code reading method according to claim 1 wherein both bars and spaces are of two or more widths.

7. Bar code reading method according to claim 6 wherein at least bar or space is of three or more different widths.

8. Bar code reading method according to claim 7 wherein two or more reference values are set for bars or spaces of three or more different widths.

9. Bar code reading method according to claim 6 wherein only one total is calculated for the stored calculation values each representing a bar width or space width.

10. Bar code reading method according to claim 6 wherein a total is calculated for the calculation values each representing a bar width, and another total is calculated for the calculation values each representing a space width.

11. Bar code reading method according to claim 3, 5, 9 or 10 wherein said totals are made for each character.

12. Bar code reading method according to claim 3, 5, 9 or 10 wherein said totals are made for the whole bar code.

13. Bar code reading method according to claim 11 or 12 wherein said totals are calculated by totalling the calculation values.

14. Bar code reading method according to claim 11 or 12 wherein said totals are calculated by totalling two of the calculation values in a predetermined order.

15. Bar code reading method according to claim 14 wherein said totals are made by totalling the maximum and minimum calculation values.

16. Apparatus for reading a bar code composed of alternative bar-and-space arrangement, at least one of the bar and space being of two or more different widths, comprising an optical reader (7) for sweeping said alternative bar-and-space arrangement;
a zone width memory (M1) for storing the values representing each binary elemental width measured by said optical reader;
a total memory (M2) for storing totals calculated on the basis of the values stored in said zone width memory;
a control for obtaining a quotient from the total and each calculation value representing the binary elemental zone width, and for comparing each quotient with a predetermined reference value, thereby making a decision as to which binary digit "0" or "1" the value represents;
and a read data memory for storing data obtained as a result of the decision.

## Patentansprüche

1. Verfahren zum Lesen eines Strichcodes, zusammengesetzt aus sich abwechselnden Strich- und Zwischenraumanordnungen, wobei wenigstens eine der binären Elementarzonen zwei oder mehr unterschiedliche Breiten aufweist, umfassend folgende Schritte:
Bewegen eines optischen Lesegerätes (7) über die sich abwechselnden Strich- und Zwischenraumanordnungen, um jede binäre Elementarzonenbreite zu messen und die gemessenen Berechnungswerte dieser Striche und Zwischenräume zu speichern;
Zusammenrechnen aller oder einer ausgewählten Anzahl der die binären Elementarzonenbreiten repräsentierenden berechneten Werte;
Teilen der resultierenden Endsumme durch den Wert, welcher eine binäre Elementarzonenbreite darstellt;
Vergleichen jedes Quotienten mit einem vorherbestimmten Referenzwert; und
Treffen einer Entscheidung, welche binäre Einheit, "0" oder "1", jede Elementarzonenbreite repräsentiert auf der Basis des Ergebnisses des Vergleichs.

2. Strichcode-Leseverfahren nach Anspruch 1, wobei nur Striche zwei oder mehr unterschiedliche Breiten aufweisen.

3. Strichcode-Leseverfahren nach Anspruch 2, wobei das Zusammenrechnen ausschließlich auf der Basis der berechneten Werte, welche die Strichbreiten darstellen, ausgeführt wird.

4. Strichcode-Leseverfahren nach Anspruch 1, wobei nur Zwischenräume zwei oder mehr unterschiedliche Breiten aufweisen.

5. Strichcode-Leseverfahren nach Anspruch 4, wobei das Zusammenrechnen ausschließlich anhand der berechneten Werte, welche die Zwischenraumbreiten darstellen, ausgeführt

6. Strichcode-Leseverfahren nach Anspruch 1, wobei sowohl Striche als auch Zwischenräume zwei oder mehr Breiten aufweisen.

7. Strichcode-Leseverfahren nach Anspruch 6, wobei wenigstens die Striche oder die Zwischenräume drei oder mehr unterschiedliche Breiten aufweisen.

8. Strichcode-Leseverfahren nach Anspruch 7, wobei zwei oder mehr Referenzwerte für Striche oder Zwischenräume von drei oder mehr unterschiedlichen Breiten festgelegt werden.

9. Strichcode-Leseverfahren nach Anspruch 6, wobei nur eine Endsumme für die gespeicherten Berechnungswerte, welche die Strichbreiten oder Zwischenräumbreiten repräsentieren, berechnet wird.

10. Strichcode-Leseverfahren nach Anspruch 6, wobei eine Endsumme für die berechneten Werte, welche jeweils eine Strichbreite repräsentieren, berechnet wird und eine andere Endsumme für die berechneten Werte, welche jeweils eine Zwischenraumbreite repräsentieren, berechnet wird.

11. Strichcode-Leseverfahren nach Anspruch 3, 5, 9 oder 10, wobei diese Endsummen für jedes Zeichen erstellt werden.

12. Strichcode-Leseverfahren nach Anspruch 3, 5, 9 oder 10, wobei die Endsummen für den gesamten Strichcode erstellt werden.

13. Strichcode-Leseverfahren nach Anspruch 11 oder 12, wobei diese Endsummen durch das Zusammenrechnen der berechneten Werte berechnet werden.

14. Strichcode-Leseverfahren nach Anspruch 11 oder 12, wobei diese Endsummen durch das Zusammenrechnen zweier der berechneten Werte in einer vorherbestimmten Ordnung berechnet werden.

15. Strichcode-Leseverfahren nach Anspruch 14, wobei diese Endsummen durch das Zusammenrechnen der maximalen und minimalen berechneten Werte erstellt werden.

16. Vorrichtung für das Lesen eines Strichcodes, welcher aus sich abwechselnden Strich- und Zwischenraumanordnungen zusammensetzt, wobei wenigstens eines der Striche und Zwischenräume zwei oder mehr unterschiedliche Breiten aufweist, umfassend
ein optisches Lesegerät (7) für das Abtasten dieer sich abwechselnden Strich- und Zwischenraumanordnungen;
einen Zonenbreitenspeicher (M1) zum Speichern der Werte, welche jeder von diesem optischen Lesegerät gemessene binäre Elementarbreite repräsentieren;
einen Endspeicher (M2) für das Speichern der Endsummen,
welche auf der Basis der in dem Zonenbreitenspeicher gespeicherten Werte berechnet werden;
eine Steuerung zur Erhaltung eines Quotienten aus der Endsumme und jedem berechneten Wert, welche die binäre Elementarzonenbreite darstellt, und für das Vergleichen jedes Quotienten mit einem vorherbestimmten Referenzwert, und dabei für das Treffen einer Entscheidung, welche binäre Einheit "0" oder "1" der Wert repräsentiert;
und ein Speicher gelesener Daten für das Abspeichern von Daten, welche als Ergebnis der Entscheidung erhalten wurden.

## Revendications

1. Procédé de lecture d'un code à barres composé d'un arrangement de barres et d'espaces alternés, au moins une des zones élémentaires binaires étant de deux largeurs différentes ou plus, comprenant les étapes de :
- déplacement d'un lecteur optique (7) en travers de l'arrangement de barres et d'espaces alternés pour mesurer chaque largeur de zone élémentaire binaire et pour mémoriser les valeurs de calcul mesurées desdites barres et desdits espaces;
- totalisation de toutes les valeurs de calcul ou d'un nombre choisi des valeurs de calcul représentant les largeurs des zones élémentaires binaires;
- division du total résultant par la valeur représentant chaque largeur de zone élémentaire binaire;
- comparaison de chaque quotient avec une valeur de référence prédéterminée; et
- prise d'une décision quant au chiffre binaire, "0" ou "1", que chaque largeur de zone élémentaire représente, en se basant sur le résultat de la comparaison.

2. Procédé de lecture de code à barres selon la revendication 1, dans laquelle seules les barres sont de deux largeurs différentes ou plus.

3. Procédé de lecture de code à barres selon la revendication 2, dans laquelle la totalisation est effectuée exclusivement sur la base sur des valeurs de calcul représentant les largeurs des barres.

4. Procédé de lecture de code à barres selon la revendication 1, dans laquelle seuls les espaces sont de deux largeurs différentes ou plus.

5. Procédé de lecture de code à barres selon la revendication 4, dans laquelle la totalisation est effectuée exclusivement sur les valeurs de calcul représentant les largeurs des espaces.

6. Procédé de lecture de code à barres selon la revendication 1, dans laquelle les barres et les espaces sont de deux largeurs différentes ou plus.

7. Procédé de lecture de code à barres selon la revendication 6, dans laquelle au moins les barres ou les espaces sont de trois largeurs différentes ou plus.

8. Procédé de lecture de code à barres selon la revendication 7, dans laquelle deux ou plusieurs valeurs de référence sont fixées pour des barres ou des espaces de trois largeurs différentes ou plus.

9. Procédé de lecture de code à barres selon la revendication 6, dans laquelle seul un total est calculé pour les valeurs de calcul mémorisées, chacune représentant une largeur de barre ou une largeur d'espace.

10. Procédé de lecture de code à barres selon la revendication 6, dans laquelle un total est calculé pour les valeurs de calcul dont chacune représente une largeur de barre, et dans laquelle un autre total est calculé pour les valeurs de calcul dont chacune représente une largeur d'espace.

11. Procédé de lecture de code à barres selon la revendication 3, 5, 9 ou 10, dans laquelle lesdits totaux sont faits pour chaque caractère.

12. Procédé de lecture de code à barres selon la revendication 3, 5, 9 ou 10, dans laquelle lesdits totaux sont faits pour le code à barres complet.

13. Procédé de lecture de code à barres selon la revendication 11 ou 12, dans laquelle lesdits totaux sont calculés en additionnant les valeurs de calcul.

14. Procédé de lecture de code à barres selon la revendication 11 ou 12, dans laquelle lesdits totaux sont calculés en additionnant deux des valeurs de calcul dans un ordre prédéterminé.

15. Procédé de lecture de code à barres selon la revendication 14, dans laquelle lesdits totaux sont calculés en additionnant les valeurs de calcul maximale et minimale.

16. Dispositif pour lire un code à barres composé d'un arrangement de barres et d'espaces alternés, au moins un parmi les barres et les espaces étant de deux largeurs différentes ou plus, comprenant :
- un lecteur optique (7) pour balayer ledit arrangement de barres et d'espaces alternés;
- une mémoire de largeur de zone (M1) pour mémoriser les valeurs représentant chaque largeur élémentaire binaire mesurée par ledit lecteur optique;
- une mémoire de total (M2) pour mémoriser les totaux calculés en se basant sur les valeurs mémorisées dans ladite mémoire de largeur de zone;
- une commande pour obtenir un quotient à partir du total et de chaque valeur de calcul représentant la largeur de zone élémentaire binaire, et pour comparer chaque quotient avec une valeur de référence prédéterminée, rendant une décision par ce moyen quant au chiffre binaire "0" ou "1" que la valeur représente; et
- une mémoire de données de lecture pour mémoriser les données obtenues comme résultat de la décision.
